Europäisches Patentamt

European Patent Office

Office européen des brevets

(11) Publication number: **0 488 271 A1**

# EUROPEAN PATENT APPLICATION

(21) Application number: **91120365.1**

(22) Date of filing: **28.11.91**

(51) Int. Cl.5: **B60L 7/10**

(30) Priority: **30.11.90 IT 1255590**

(43) Date of publication of application:
**03.06.92 Bulletin 92/23**

(84) Designated Contracting States:
**AT BE CH DE DK ES FR GB GR LI LU NL SE**

(71) Applicant: **DIGITALIA S.R.L.**
**Via Corsica, 19/3**
**Genova(IT)**
Applicant: **TECHNIPLAST S.r.l.**
**Via Roma, 8/A**
**Genova(IT)**

(72) Inventor: **Zipoli, Claudio, Ing.**
**Via Molfino 6/40**
**Genova(IT)**

(74) Representative: **La Ciura, Salvatore**
**c/o STUDIO D'ORIO Via F. Sforza, 3**
**I-20122 Milan(IT)**

(54) **Method and device for the generation, control and use of recovered electrical energy in particular in electrical feed vehicles.**

(57) Method for the generation, control and use of recovered electrical energy for electrically driven vehicles with at least one electric propulsion unit (M1, M2) fed from a primary electrical energy source (8), like a storage battery, in which:

a) the electric propulsion unit (M1, M2) is also used as a braking device and for converting kinetic energy to electrical energy during the deceleration and braking phases of the vehicle;

b) during the deceleration or braking phase, the electric propulsion unit (M1, M2) is isolated from the primary electrical energy source (8) and is connected to a provisional electrostatic accumulator (20) for electrical energy recovery through high speed charging (electrostatic flywheel).

Fig.1

The invention consists of a method and device for the generation, control and use of recovered electrical energy, in particular for electrical feed vehicles.

The scope of the invention is the realization of a method and a device for the generation, control and use of recovered electric power in electrical drive vehicles, allowing the optimum use of the recovered energy and preventing, as much as possible, its dissipation in the form of heat or through friction.

Aim of the invention is the realisation of the method and device suitable for the system with which the recovered electrical energy is generated, allowing its rapid storage and a high output level.

The invention satisfies the above requirements with its method of electrical energy recovery, generation and control, in particular in electrically powered vehicles having at least one propulsion unit fed by a primary electric power source, for example, a storage battery or similar. The system is characterized by the fact that:

a) the electric propulsion unit is used as a converter of kinetic energy into recovered electrical energy during vehicle deceleration and braking.

b) during the deceleration or braking phases, the electric propulsion unit is isolated from the primary electric power source and connected with a provisional electrostatic accumulator for storing the recovered electrical energy at a high charging speed (electrostatic flywheel).

Advantageously the voltage of the recovered electrical energy is adjusted to the optimum recharging voltage of the provisional electrostatic accumulator, the voltage of which is determined by the charge level of the accumulator in real time.

A further characteristic of the invention is the fact that whenever there are long braking phases or long electrical energy recovery phases, the provisional electrostatic accumulator reaches its maximum charge or an excessive charge level and the regenerated electric power is sent directly to the primary accumulators. In this case, the voltage of the recovered energy can be adjusted to the charge level of the primary accumulators.

According to a further characeristic, the recovered electrical energy stored in the provisional electrostatic accumulator is subsequently taken directly from it at the end of the vehicle deceleration or braking phase for the successive acceleration or starting phase, and the electric propulsion unit remains connected to the provisional electrostatic accumulator only until the latter has reached a preset minimum charge level whereas this minimum charge level of the provisional electrostatic accumulator is reached, and the acceleration or starting phase continues, the electric propulsion unit is disconnected from the provisional electrostatic accumulator and reconnected to the primary electric power source.

In accordance with the above method, the invention also consists of a device which includes a computer. The following units are connected to the control outputs of this device:

- primary electric power source control unit located between the electric propulsion unit and the primary electric power source.
- a provisional electrostatic accumulator control unit located between the computer and the provisional electrostatic accumulator and between this latter and the electric propulsion unit.

The following units are connected to the inputs of the computer:
user devices for controlling the amount of electric power with which to feed the electric propulsion unit and the deceleration or braking intensity controls (accelerator or brake pedal).

On the basis of the signals issued by the user control devices, the computer controls:

- the primary power source and provisional accumulator for the amount of power to feed to the electric propulsion unit.
- the provisional electrostatic accumulator control unit for the variation in recovered energy voltage according to the charge level of the provisional electrostatic accumulator.
- the alternative connection of the two control units with the propulsion units during their deceleration, braking and acceleration phases.

The invention is based on the use of new manufacturing techniques for high capacity condensers capable of storing vast quantities of electrical energy in electrostatic form in theory without fading. These condensers, also known as "super condensers", have large capacities, very low series resistances and high parasite resistances allowing the rapid storing of electric power in electrostatic form, low heat loss and a high charge holding capacity.

The invention utilizes one or more of these super-condensers as the provisional electrostatic accumulators, the nominal voltage of which is equal to or greater than the nominal voltage of the electric propulsion unit.

Thanks to all these characteristics, the device invented allows the recovered electrical energy obtained during the vehicle deceleration or braking phase to be fully utilized. As these deceleration and braking phases are on average of brief duration, the energy recovery is presented in impulse form and is not suitable for recharging the storage battery, though the energy can be fully recovered and stored thanks to the fast charging speed of the provisional electrostatic accumulators.

Most of the deceleration or braking kinetic energy which is normally dissipated as heat can, as a consequence, be recovered with a high level of efficiency. Its distribution, directly from the provisional electrostatic accumulators in a subsequent acceleration or starting phase, is just as rapid, again due to the low internal series resistance. Furthermore, this direct distribution from the provisional electrostatic accumulator prevents any subsequent leakage in the electrical circuits, guaranteeing maximum yield throughout the energy recovery cycle.

The aim of the invention has other characteristics which further improve the method and equipment mentioned above, and they constitute the object of the appended claims.

The particular characteristics of the invention anf the adventages to be gained will appear with more details from the description of a favourite execution form, illustrated as a non restrictive example in the enclosed diagrams wherein:

Fig. 1 shows a block diagram of an electrical feed vehicle.

Fig. 2 shows a block diagram of the device used for the control of the recovered electrical energy in the vehicle according to Fig. 1.

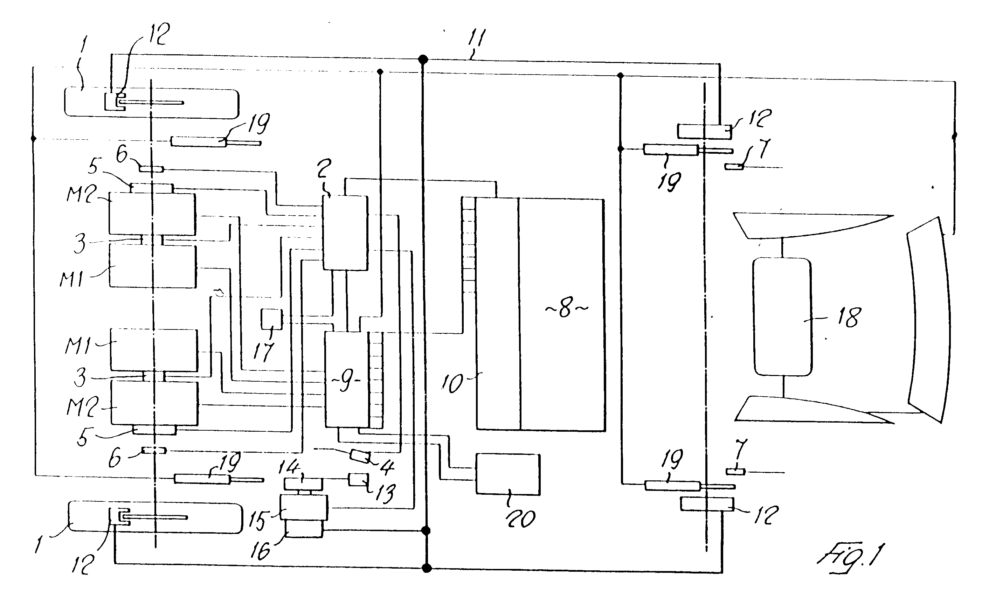

The block diagram in Fig. 1, which is an example of the realizaton of the invention, refers to a four wheels vehicle. This electrical feed vehicle has a separate propulsion unit for each of the two drive wheels (1); a propulsion unit power supply circuit; an electrical energy recovery unit equipped with several energy recovery generators; a computer (2) fitted with various sensors and control actuators for the control of the vehicle functions.

The propulsion unit of each drive wheel (1) consists of two electric motors M1 and M2. The two motors M1 and M2 are mechanically connected to a common motor shaft. Motor M2 or "starter motor" develops its pull-in torque at slow running, at 1000 rpm for example, and is suitable for supplying the push from standstill and the acceleration. Motor M2 called the "cruising motor", develops its pull-in torque at a high running, 3000 rpm for example, and as a result is used preferably for normal cruising.

The alternate or contemporaneous activation or deactivation of the motors M1 and M2 of each propulsion unit is controlled by the computer (2) on the basis of the torque on the common driving shaft measured by the torque sensors (3) and from the acceleration requested by the user; the acceleration request is signalled to computer (2) by the accelerator pedal (4).

The propulsion units are connected to their respective drive wheels (1) through an adjustable or electrically operated coupling (5), depending on the transmitted torque value. The coupling devices (5) are directly controlled by the computer (2) which determines the optimum control or piloting currents or voltages from the torque transmitted from the propulsion units to the respective drive wheel (1). The transmitted torque is monitored by the sensors (6).

The computer (2) also has connections from the steering angle sensors (7), from which computer (2) can determine the difference in angular speed of the drive wheels (1) and controls the motors M1 and M2 of each drive wheel (1) accordingly. This also allows the self-locking differential, flexible coupling and brake balancing functions to be activated.

The motor M1 and M2 of each propulsion unit is connected to a storage battery (8) consisting of, for example, rechargeable type batteries connected together in a manner that can supply the power feed voltages and currents through a power control unit (9). A voltage control device (10), consisting of multiple voltage boosters, is provided between the storage battery (8) and the power control unit (9).

The power control unit (9), which manages the motor (M1 and M2) connections to the storage battery (8) and controls their feed current, is connected to the control output of the computer (2). The power output control is performed by the user through the accelerator pedal (4) which is also connected to the computer (2).

The braking circuit is hydraulic and is indicated by the number 11. The braking devices (12) for each wheel are controlled by the brake pedal (13) through a hydraulic pump (14) and a pressurized fluid reservoir (15).

An electric shut-off valve (16) is located between the pressurized fluid reservoir (15) and the brake circuit (11), while the reservoir itself is fitted with a pressure sensor (not illustrated). This pressure sensor is also connected to the computer (2).

In addition to the basic functions, the computer (2) can also control all the other vehicle functions, including the subsidiaries such as heating, etc.. Fig. 1 shows an example of a heating pump (17) connected to both the power control unit (9) and computer (2).

The electrical energy recovery devices are also connected to the power control unit (9). These devices can be of any type, though in this executing example they consist of motors M1 and M2 which, during braking, act as the braking medium, converting the kinetic energy absorbed by one or several photovoltaic cells (18) and shock absorbers (19) into recovered electrical energy. The dampers (19) act as linear electric power generators and convert the dynamic effort of the suspension into electrical energy.

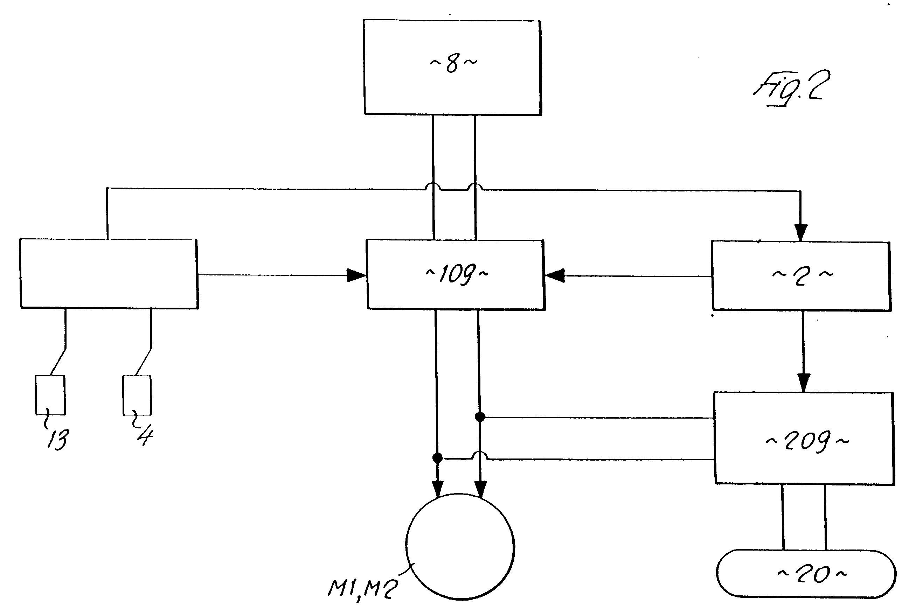

The detailed electrical energy recovery circuit is illustrated in detail in Fig. 2. Each motor M1 and M2 of each propulsion unit, besides being connected to the storage battery (8), is also connected to a provisional accumulator (20). This provisional accumulator (20) is of the electrostatic type and consists of many special condensers, also called super-condensers. These have a very large capacity and a very low internal series resistance. The storage battery (8) is connected to each motor M1 and M2 through the control unit (109) of the battery (8). The provisional electrostatic accumulator (20) is connected to the motors M1 and M2 through its own control unit (209). These two control units (109 and 209) are themselves controlled by the computer (2), to which the motor M1 and M2 power feed level and braking intensity control devices are also connected; such control devices consist of the accelerator (4) and brake pedal or an associated pressure sensor (13).

The control unit of power (9) illustrated in Fig. 1 is made up of several sub units consisting, at least, of the motor M1 and M2 power feed level control unit, set by the user through the accelerator pedal (4), the battery (8) control unit (109) and the provisional electrostatic accumulator (20) control unit (209).

The other electrical energy recovery generators (18 and 19) can also be connected to the provisional electrostatic accumulator (20) control unit.

The computer (2) controls the storage and distribution of the recovered electrical energy as follows:
During the deceleration or slow braking phase, the motors M1 and M2 of each propulsion unit are used to absorb the kinetic energy and convert it into recovered electrical energy. This electrical energy is stored in the provisional electrostatic accumulator (20). When the brake pedal (13) or accelerator pedal (4) is operated, the computer (2) receives a braking or deceleration signal isolating the motors M1 and M2 from the storage battery (8) and connects them to the provisional electrostatic accumulator (20) through the respective control units (109 and 209).

The recovered electrical energy is stored in the electrostatic accumulator (20) rapidly and without any substantial loss, thanks to its characteristics.

During the provisional electrostatic accumulator (20) charging phase, its optimum charging voltage varies with the change in its level of charge. The control unit (209) varies the voltage of the recovered electrical energy in real time in accordance with the variation in the optimum charge voltage, i.e. according to the charge status of the provisional accumulator (20).

The energy required for a subsequent acceleration or starting phase is usually taken, either all or part, from the provisional accumulator (20), thus avoiding the energy leaks or losses caused in traditional accumulators by excessive storage time. The computer (2) maintains this connection between the provisional electrostatic accumulator (20) and the motors M1 and M2 until the charge level in the accumulator has reached a predetermined minimum level. When this minimum level is reached, the computer (2) isolates the provisional electrostatic accumulator (20) from the motors M1 and M2 and connects them to the storage battery (8). The switching of the motors M1 and M2 between the storage battery (8) and the provisional electrostatic accumulator (20) takes place during each deceleration or braking phase when the predetermined minimum charge level of the provisional electrostatic accumulator (20) is reached.

A further characteristic of the invention comes to light during harsh braking, when the computer (2) activates the hydraulic braking system (11) at the same time as the previously mentioned generator function of the motors M1 and M2. With this system, a substantial braking force is obtained similar, in certain respects, to a progressive braking system on a conventional vehicle with an internal combustion engine. The braking intensity is signalled to the computer (2) on the basis of the pressure on the brake pedal (13).

During starting, the motors M1 and M2 are automatically switched from the provisional electrostatic accumulator (20) to the storage battery (8) if the charge level of the accumulator (20) itself is not above the preset minimum. Any charge losses can be compensated for by further electrical energy recovery devices (18 and 19). During long acceleration or braking phases (for example on long downhill stretches), the quantity of recovered electrical energy stored in the provisional accumulator (20) can reach a preset maximum level. The invention, in this case, ensures that the computer (2) sends any extra electrical energy supplied by the motors M1 and M2 directly to the storage battery (8) of the primary power source. The advantage is that a control unit can be provided (not illustrated in detail) to vary the voltage of the recovered energy in accordance with the charge level of the primary power source battery (8), thus optimizing the storage of the recovered energy.

Naturally, the invention is not limited to the executive forms described and illustrated above but can be widely varied and modified without abandoning the basic principle above-mentioned and claimed below.

**Claims**

1. Method for the generation, control and use of recovered electrical energy, in particular, for electrical feed vehicles with at least one electric propulsion unit (M1, M2) fed from a primary electrical energy source (8), for example, a storage battery or similar, characterized by the fact that:

a) the electric propulsion unit (M1, M2) is also used as a braking device and for converting kinetic energy to electrical energy recovery during the deceleration and braking phases of the vehicle;

b) during the deceleration or braking phase, the electric propulsion unit (M1, M2) is isolated from the primary electrical energy source (8) and is connected to a provisional electrostatic accumulator (20) for electrical energy recovery through high speed charging (electrostatic flywheel).

2. A method in accordance with the claim 1 above, characterized by the fact that the voltage of the recovered electrical energy is varied in accordance with the optimum charging voltage of the provisional electrostatic accumulator (20), the value of which is determined in real time from the charge level of the accumulator (20) itself.

3. A method in accordance with claims 1 and 2, characterized by the fact that:

a) the recovered electrical energy stored in the provisional electrostatic accumulator (20) is taken directly from the accumulator itself at the end of the vehicle deceleration or braking phase for the subsequent starting or acceleration phase and the electric propulsion unit (M1, M2) is only connected to the provisional electrostatic accumulator (20) while it is above the predetermined minimum charge level;

b) when the provisional electrostatic accumulator (20) minimum charge level is reached and with the going on of the the starting or acceleration phase, the electric propulsion unit (M1, M2) is disconnected from the provisional electrostatic accumulator (20) and reconnected to the primary electrical energy source (8).

4. A method in accordance with one or more of the claims 1,2 or 3, characterized by the fact that the provisional electrostatic accumulator (20) has a maximum charge level and when this maximum charge level is reached, any extra recovered electrical energy generated is stored directly in the primary energy source (8); the voltage of the recovered electrical energy can still be varied in real time according to the change in the charge level of the primary energy source (8).

5. A method for the generation and control of recovered electrical energy, in particular, in electrical feed vehicles fitted with a hydraulic braking system (11) and according to one or more of the previous claims, is characterized by the fact that different devices are used depending on the intensity of the braking action imposed by the user: for normal braking, only the electric propulsion units (M1, M2) are used while for heavy or harsh braking, the hydraulic braking system (11) is brought into action.

6. A method according to one or more of the previous claims, characterized by the fact that during a starting phase following a provisional or prolonged stop of the vehicle, is mostly used the recovered electrical energy stored in case, in the vehicle when the charge level was greater than the preset minimum charge level; otherwise, the propulsion units (M1, M2) are automatically connected to the primary electrical energy source (8).

7. A device for the generation, control and use of recovered electrical energy in electrical feed vehicles according to one or more of the previous claims, characterized by the fact that the system includes a computer (2), the control outputs of which are connected to the following:

- a primary electrical energy source (8) control unit (109) located between the electric propulsion unit (M1, M2) and the primary electrical energy source (8) itself.
- a provisional electrostatic accumulator (20) control unit (209) located between the computer (2) and the provisional electrostatic accumulator (20) and between this latter and the electric propulsion unit (M1, M2). The user control devices (4, 13) for regulating the quantity of electrical energy to feed to the electric propulsion unit (M1, M2) and for determining the deceleration and braking intensity (accelerator or brake pedal) are connected to the inputs of the computer (2). Computer (2) controls on the basis of signals issued by the said user control devices (4, 13):
- the primary electrical energy source (8) and provisional electrostatic accumulator (20) control units (109 and 209), limiting the level of energy fed to the propulsion unit (M1, M2);
- provisional electrostatic accumulator (20) control unit (209) for varying the voltage of the recovered electrical energy in accordance with the charge level of the provisional accumulator (20), and for the alternate and/or simultaneous connection of both control units (109 and 209) to the propulsion units (M1, M2) in their deceleration, braking and acceleration phases.

8. A device in accordance with claim 7, characterized by the fact that multiple electrical energy recovery generators in the form of photovoltaic cells (18), or similar, are connected to the provisional electrostatic accumulator (20).

9. A device in accordance with claim 8., characterized by the fact that the shock absorbers (19) are also used as electrical energy recovery generators in the form of electrical energy linear generators.

10. A device in accordance with one or more of claims 7 to 9, characterized by the fact that the provisional electrostatic accumulator consists of one or more condensers called super-condensers having a very high capacity and a very low internal series resistance and can store a vast quantity of energy in a very short time, and the nominal voltage of which should preferably be equal to or greater than the nominal feed voltage of the electric propulsion units (M1 and M2).

11. A device in accordance with one or more of the previous claims, characterized by the fact that it consists of a hydraulic braking system (11) with a brake device (12) for each wheel controlled by a pedal (13) combined with a pump (14), a pressurized fluid reservoir (15) and a solenoid shut-off valve (16) being said pressurized fluid reservoir (15), fitted with a pressure sensor. This pressure sensor and the electric shut-off valve (16) are connected to the computer (2) for the optimum control of the recovered energy generated during the braking phase.

12. A device in accordance with one or more of claims 6 to 10, characterized by the fact that the system has a distributed power control unit (9) controlled by the computer (2) and located between the electric propulsion units (M1 and M2), the storage battery (8) and the provisional electrostatic accumulator (20) having the power control unit (9) several sub units consisting of: an energy feed level control unit to the electric propulsion units (M1 and M2); a control unit (109) of the storage battery (8); a control unit (209) of the provisional electrostatic accumulator (20).

13. A device in accordance with one or more of the previous claims, characterized by the fact that the storage battery (8) control unit (109) is equipped with a recovered energy voltage regulation device for varying the voltage in accordance with the storage battery (8) charge level.

14. A method and device for the generation and control of recovered electrical energy, in particular, in electrical feed vehicles either wholly or partly as described and illustrated previously, and for the purposes above-specified.

Fig.1

Fig.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| P,X | EP-A-0 418 995 (ISUZU MOTORS LTD)<br>* The whole document * | 1 | B 60 L 7/10 |
| A | DE-A-3 602 544 (W. SCHOPF)<br>* The whole document * | 1,2,7 | |
| A | US-A-4 218 624 (E.L. SCHIAVONE)<br>* Column 2, line 9 - column 3, line 3 * | 1,7,9 | |
| A | US-A-4 908 553 (L.O. HOPPIE et al.)<br>* Abstract; figure 2 * | 1,7 | |
| A | WO-A-9 001 828 (DIGIMOTO OF SWEDEN AB)<br>* Abstract; figure 1 * | 1,2,7 | |
| A | US-A-3 548 275 (J. INAGAKI et al.)<br>* The whole document * | 1,7 | |

TECHNICAL FIELDS SEARCHED (Int. Cl.5)

B 60 L
H 02 P

The present search report has been drawn up for all claims

| Place of search | Date of completion of the search | Examiner |
|---|---|---|
| THE HAGUE | 19-02-1992 | BEYER F. |